# EUROPEAN PATENT APPLICATION

(11) **EP 4 221 423 A1**
(43) Date of publication of application: **02.08.2023**
(21) Application number: 20955545.7
(22) Date of filing: 29.09.2020
(51) Int. Cl.: H04W 74/08

(54) **RANDOM ACCESS METHODS AND TERMINALS**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZUO, Zhisong, Dongguan, Guangdong 523860 (CN); LI, Haitao, Dongguan, Guangdong 523860 (CN)
(74) Representative: Manitz Finsterwald Patent- und Rechtsanwaltspartnerschaft mbB
(86) International application number: PCT/CN2020/118878
(87) International publication number: WO 2022/067519

(57) **Abstract**

The present application relates to a random access method and a terminal device. A random access method includes: a terminal device determines, based on a first condition, whether to perform frequency hopping in a random access procedure. A random access method includes: a terminal device determines, based on a first time length, a starting time to receive an RAR window. A random access method includes: a terminal device determines, based on a first time length, a time to retransmit a PRACH. According to the embodiments of the present application, it is conductive for the terminal device to performing random access successfully.

## Description

### TECHNICAL FIELD

The present application relates to the field of communications and, more specifically, to a random access method and terminal device.

### BACKGROUND

With the continuous evolution and assistance of wireless communication technologies, the Internet of Things (Internet of Things, IoT) technology has developed rapidly. For example, the MTC (Machine-Type Communication, Machine-Type Communication)/eMTC (LTE enhanced MTC, MTC based on LTE evolution) and NB-IoT (Narrow Band Internet of Things, Narrow Band Internet of Things) series standards promoted by 3GPP (3rd Generation Partnership Project, 3rd Generation Mobile Communication Standard Organization) organization have become candidate technical standards for 5G massive (massive) MTC technologies. These technical standards are expected to play a huge role in smart home, smart city, smart factory, remote monitoring, smart transportation and other aspects of people's production and life. The MTC/eMTC and NB-IoT terminals have low cost, low price, support for ultra-low power consumption, support for deep, wide and large coverage scenarios, and other technical advantages, which is conducive to the rapid popularization of the IoT technology at the initial stage of its development. However, these technologies also have limitations in some application scenarios. Since MTC/eMTC and NB-IoT support some applications with low data rate and high transmission delay, they cannot be applied in some IoT scenarios that require relatively high rate, such as video surveillance in intelligent security and industrial applications that require relatively low delay. If the new radio (New Radio, NR) terminal is directly adopted, the cost is relatively high since the design indicators of the NR terminal, such as transmission rate, transmission delay and other aspects, far exceed the actual requirements of these scenarios.

In order to improve the terminal system under a 5G massive MTC scenario, it is possible to design an NR MTC type terminal that not only supports the requirements of medium transmission rate and medium delay, but also has low cost. At present, 3GPP calls this NR MTC type terminal RedCap (Reduced Capacity NR Devices, Reduced Capacity NR) terminal. The channel bandwidth supported by the RedCap terminal is relatively narrow. However, if the channel bandwidth supported by a terminal is relatively narrow, it would probably cause a random access procedure not to be performed normally.

### SUMMARY

Embodiments of the present application provide a random access method and terminal device, which are conducive to successful execution of random access.

An embodiment of the present application provides a random access method, including:
determining, by a terminal device and based on a first condition, whether to perform frequency hopping in a random access procedure.

An embodiment of the present application provides a random access method, including:
determining, by a terminal device, a starting time to receive a random access response RAR window, based on a first time length.

An embodiment of the present application provides a random access method, including:
determining, by a terminal device and based on a first time length, a time to retransmit a physical random access channel PRACH.

An embodiment of the present application provides a terminal device, including:
a processing unit, configured to determine, based on a first condition, whether to perform frequency hopping in a random access procedure.

An embodiment of the present application provides a terminal device, including:
a processing unit, configured to determine, based on a first time length, a starting time to receive a random access response RAR window.

An embodiment of the present application provides a terminal device, including:
a processing unit, configured to determine, based on a first time length, a starting time to receive a random access response RAR window.

An embodiment of the present application provides a terminal device, including a processor and a memory. The memory is configured to store a computer program, and the processor is configured to invoke and run the computer program stored in the memory, to enable the terminal device to perform the random access methods mentioned above.

An embodiment of the present application provides a chip, configured to implement the random access methods mentioned above.

Specifically, the chip includes a processor configured to invoke a computer program from a memory and run the computer program, to enable a device installed with the chip to perform the random access methods mentioned above.

An embodiment of the present application provides a computer-readable storage medium, and the computer-readable storage medium is configured to store a computer program which, when run by a device, enables the device to perform the random access methods mentioned above.

An embodiment of the present application provides a computer program product, including computer program instructions which enable a computer to perform the above random access methods mentioned above.

An embodiment of the present application provides a computer program that, when running on a computer, enables the computer to perform the random access methods mentioned above.

In the embodiments of the present application, the terminal device determines, based on the first condition, whether to perform frequency hopping in the random access procedure, which is conducive to successful execution of random access.

### BRIEF DESCRIPTION OF DRAWINGS

FIG. 1 is a schematic diagram of an application scenario according to an embodiment of the present application.
FIG. 2a is a schematic diagram of a four-step random access procedure.
FIG. 2b is a schematic diagram illustrating timing between an RAR window and a PRACH in NR.
FIG. 3 is a schematic diagram of a frequency domain configuration of a PRACH resource.
FIG. 4 is a schematic diagram illustrating mapping relationships between SSBs and ROs.
FIG. 5 is a schematic flowchart of a random access method according to an embodiment of the present application.
FIG. 6 is a schematic flowchart of a random access method according to an embodiment of the present application.
FIG. 7 is a schematic flowchart of a random access method according to an embodiment of the present application.
FIG. 8 is a schematic diagram illustrating new timing between an RAR window and a PRACH.
FIG. 9 is a schematic block diagram of a terminal device according to an embodiment of the present application.
FIG. 10 is a schematic block diagram of a terminal device according to an embodiment of the present application.
FIG. 11 is a schematic block diagram of a terminal device according to an embodiment of the present application.
FIG. 12 is a schematic block diagram of a terminal device according to an embodiment of the present application.
FIG. 13 is a schematic block diagram of a communication device according to an embodiment of the present application.
FIG. 14 is a schematic block diagram of a chip according to an embodiment of the present application.
FIG. 15 is a schematic block diagram of a communication system according to an embodiment of the present application.

### DESCRIPTION OF EMBODIMENTS

The technical solutions in the embodiments of the present application will be described below in conjunction with the accompanying drawings in the embodiments of the present application.

The technical solutions of the embodiments of the present application may be applied to various communication systems, such as a global system of mobile communication (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolution system of NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial communication Networks (Non-Terrestrial Networks, NTN) system, a universal mobile telecommunication system (Universal Mobile Telecommunication System, UMTS), a wireless local area networks (Wireless Local Area Networks, WLAN), a wireless fidelity (Wireless Fidelity, WiFi), a 5th-Generation communication (5th-Generation, 5G) system or other communication systems, etc.

Generally speaking, a traditional communication system supports a limited number of connections, and is easy to implement. However, with the development of communication technology, mobile communication systems will not only support traditional communication, but also support, for example, a device to device (Device to Device, D2D) communication, a machine to machine (Machine to Machine, M2M) communication, a machine type communication (Machine Type Communication, MTC), a vehicle to vehicle (Vehicle to Vehicle, V2V) communication, or a vehicle to everything (Vehicle to everything, V2X) communication and so on. The embodiments of the present application may also be applied to these communication systems.

Optionally, the communication systems in the embodiments of the present application can be applied to a carrier aggregation (Carrier Aggregation, CA) scenario, a dual connectivity (Dual Connectivity, DC) scenario, and a standalone (Standalone, SA) networking scenario.

Optionally, the communication systems in the embodiments of the present application can be applied to an unlicensed spectrum, where the unlicensed spectrum can also be considered as a shared spectrum; alternatively, the communication systems in the embodiments of the present application can also be applied to a licensed spectrum, where the licensed spectrum may also be considered as a non-shared spectrum.

The embodiments of the present application describe various embodiments in combination with a network device and a terminal device, where the terminal device may also be referred to as user equipment (User Equipment, UE), an access terminal, a user unit, a user station, a mobile station, a mobile console, a remote station, a remote terminal, a mobile device, a user terminal, a terminal, a wireless communication device, a user agent, or a user device.

The terminal device may be a station (STATION, ST) in a WLAN, a cellular phone, a cordless phone, a session initiation protocol (Session Initiation Protocol, SIP) phone, a wireless local loop (Wireless Local Loop, WLL) station, a personal digital processing (Personal Digital Assistant, PDA) device, a handheld device with a wireless communication function, a computing device or other processing devices connected to a wireless modem, a vehicle-mounted device, a wearable device, a terminal device in a next-generation communication system such as a terminal device in an NR network, or a terminal device in a future evolved public land mobile network (Public Land Mobile Network, PLMN) network.

In the embodiments of the present application, the terminal device may be deployed on land, including indoor or outdoor, handheld, wearable or vehicle mounted; it may also be deployed on the water surface (for example, a ship); or it may also be deployed in the air (for example, on an aircraft, a balloon, and a satellite).

In the embodiments of the present application, the terminal device may be a mobile phone (mobile phone), a pad (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home).

As an example rather than a limitation, in the embodiments of the present application, the terminal device may also be a wearable device. The wearable device may also be referred to as a wearable intelligent device, which is the general name of wearable devices that are developed by performing, with the wearable technology, intelligent design on daily wear, such as glasses, gloves, watches, clothing, and shoes. The wearable device is a portable device that is directly worn on the body or integrated into the user's clothes or accessory. The wearable device is not merely a hardware device, it also realizes powerful functions through software support, data interaction, and cloud interaction. The generalized wearable smart devices include those that are full-featured and large-sized and can realize full or partial functions without relying on smart phones, for example, smart watches or smart glasses, and those that only focus on a certain type of application function and need to be used in conjunction with other devices such as smart phones, for example, various smart bracelets and smart jewelry for monitoring signs.

In the embodiments of the present application, the network device may be a device configured to communicate with a mobile device; the network device may be an access point (Access Point, AP) in WLAN, a base station (Base Transceiver Station, BTS) in GSM or CDMA, a base station (NodeB, NB) in WCDMA, or an evolutional base station (Evolutional Node B, eNB or eNodeB) in LTE; or a relay station or an access point; or a vehicle-mounted device, a wearable device, and a network device (gNB) in an NR network, a network device in a further evolved PLMN network or a network device in an NTN network, etc.

As an example rather than a limitation, in the embodiments of the present application, the network device may have mobility characteristics, for example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, etc. Optionally, the network device may also be a base station set in land, water, and other locations.

In the embodiments of the present application, the network device may provide services for a cell, and the terminal device communicates with the network device through a transmission resource (for example, frequency domain resource, or spectrum resource) used by the cell. The cell may be a cell corresponding to the network device (e.g., a base station), and the cell may belong to a macro site, or a base station corresponding to a small cell (Small cell), where the small cell herein may include: a metro cell (Metro cell), micro cell (Micro cell), pico cell (Pico cell), femto cell (Femto cell), etc., where these small cells have characteristics of small coverage and low transmission power, which are suitable for providing high-speed data transmission services.

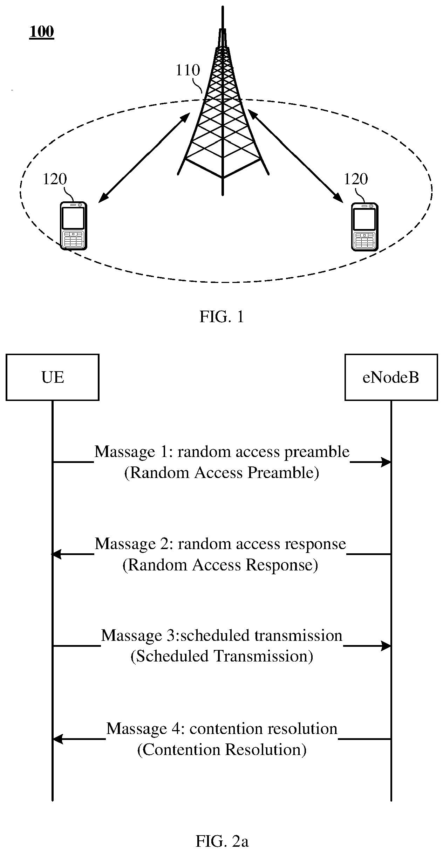

FIG. 1 exemplarily shows a communication system 100. The communication system includes one network device 110 and two terminal devices 120. Optionally, the communication system 100 may include a plurality of network devices 110, and other number of terminal devices 120 may be included within the coverage of each network device 110, which is not limited by the embodiments of the present application.

Optionally, the communication system 100 may also include a mobility management entity (Mobility Management Entity, MME), an access and mobility management function (Access and Mobility Management Function, AMF), and other network entities, which are not limited by the embodiments of the present application.

The network device may include an access network device and a core network device. That is, the wireless communication system also includes a plurality of core networks for communicating with access network devices. The access network device may be an evolutional base station (evolutional node B, abbreviated as eNB or e-NodeB), a macro base station, a micro base station (also called "small cell"), a pico base station, an access point (access point, AP), a transmission point (transmission point, TP) or a new generation base station (new generation Node B, gNodeB), etc. in a long-term evolution (long-term evolution, LTE) system, a next-generation (mobile communication system) (next radio, NR) system or an authorized auxiliary access long-term evolution (authorized auxiliary access long-term evolution, LAA-LTE) system.

It should be understood that a device with a communication function in the network/system in the embodiments of the present application may be referred to as a communication device. Taking the communication system shown in FIG. 1 as an example, the communication device may include a network device and a terminal device that have a communication function, and the network device and terminal device may be a specific device in the embodiments of the present application, which will not be repeated here. The communication device may also include other devices in the communication system, such as a network controller, a mobile management entity, and other network entities, which are not limited by the embodiments of the present application.

It should be understood that the terms "system" and "network" are often used interchangeably herein. The term "and/or" herein is only an association relationship describing the associated objects, which means that there may be three kinds of relationships, for example, A and/or B may mean that: there are three cases where A exists alone, both A and B exist, and B exists alone. In addition, the character "/" herein generally indicates that the leading and trailing associated objects are in an "or" relationship.

It should be understood that the "indicate" mentioned in the embodiments of the present application may be a direct indication, an indirect indication, or may also refer that there is an association. For example, A indicates B, which may refer that A indicates B directly, for example, B may be obtained through A; it may also refer that A indicates B indirectly, for example, A indicates C, and B may be obtained through C; and it may also refer that there is an association between A and B.

In the description of the embodiments of the present application, the term "correspond" may refer that there is a direct or indirect correspondence between the two, or refer that there is an association between the two, or that there is a relationship between indicating and being indicated, configuring and being configured, etc.

To facilitate the understanding of the technical solutions of the embodiments of the present application, the following describes the related technologies of the embodiments of the present application. The following related technologies as optional solutions may be arbitrarily combined with the technical solutions of the embodiments of the present application, which fall within the protection scope of the embodiments of the present application.

At present, the NR terminal needs to support at least two receive channels, and the NR terminal on some frequency bands needs to support four receive channels, and each receive channel includes a receiving antenna, a filter, a PA (Power Amplifier, Power Amplifier), an AD (Analog Digital, Analog Digital) sampler and other components. Therefore, reducing the number of radio frequency channels required for the NR terminal will significantly reduce the cost of the terminal. If a terminal with two radio frequency channels is reduced to one radio frequency channel, the cost of the chip module can be reduced by about 1/3. Therefore, the RedCap terminal may be equipped with fewer antennas to reduce the cost of the terminal.

In another aspect, a normal NR terminal needs to support a wide transmission bandwidth. For example, an FR1 terminal needs to support a maximum bandwidth of 100MHz. In order to reduce the cost of the RedCap terminal and reduce the power consumption of the RedCap terminal, the RedCap terminal may support a small terminal bandwidth. For example, in the FR1 band, adoption of a terminal bandwidth of 20MHz may also significantly reduce the cost of the terminal.

Similarly, the methods for reducing the cost of the terminal further include reducing the processing speed requirements for the terminal, adopting HD (Half Duplex, Half Duplex) - FDD (Frequency division Duplex, Frequency division Duplex), etc.

The following describes the random access procedure (Random Access Procedure) of the NR new radio.

Take the four-step random access procedure as an example: after the cell search procedure, a UE has obtained downlink synchronization with a cell, and thus the UE can receive downlink data. However, the UE can perform uplink transmission only after it obtains uplink synchronization with the cell. Through the random access procedure, the UE establishes a connection with the cell and obtains the uplink synchronization. The main purposes of the random access may include: obtaining the uplink synchronization; assigning a unique C-RNTI (Cell-Radio Network Temporary Identifier, Cell-Radio Network Temporary Identifier) to the UE.

Exemplarily, the random access procedure is typically triggered by one of the following events:
(1) establishing wireless connection during initial access: a UE will enter an RRC_CONNECTED (connected) state from an RRC_IDLE (idle) state;
(2) RRC Connection Re-establishment procedure (RRC Connection Re-establishment procedure): for the UE to re-establish a wireless connection after a radio link failure (Radio Link Failure);
(3) handover (handover): at this time, the UE needs to establish uplink synchronization with a new cell;
(4) under the RRC_CONNECTED state, when downlink data arrives (ACK (acknowledgement)/NACK (negative acknowledgement) needs to be replied at this time), uplink is in an "out of sync" state;
(5) under the RRC_CONNECTED state, when uplink data arrives (for example, a measurement report needs to be reported or user data needs to be sent), uplink is in an "out of sync" state or no PUCCH (Physical Uplink Control CHannel, Physical Uplink Control CHannel) resources are available for SR (Scheduling Request, Scheduling Request) transmission; at this time, a UE that has been already in an uplink synchronization state is allowed to use a PRACH (Physical Random Access Channel, Physical Random Access CHannel) to replace the function of SR; and
(6) under the RRC_CONNECTED state, in order to locate a UE, timing advance (timing advance, TA) is required.

In the 3GPP protocol, a four-step based random access procedure is supported. For example, as shown in FIG. 2a, the four-step random access procedure may include the following steps.

Step 1: a UE transmits a preamble (preamble).

The UE transmits a random access preamble (random access preamble) to a network device, for example, a base station gNodeB, to notify the gNodeB that there is a random access request, and enable the gNodeB to estimate a transmission delay between the gNodeB and the UE and calibrate uplink timing (timing) based on the transmission delay. In NR, the preamble (preamble) is transmitted in a periodically appearing RO (PRACH occasion, random access occasion) configured by the network.

Step 2: the gNodeB transmits an RAR (Random Access Response, Random Access Response).

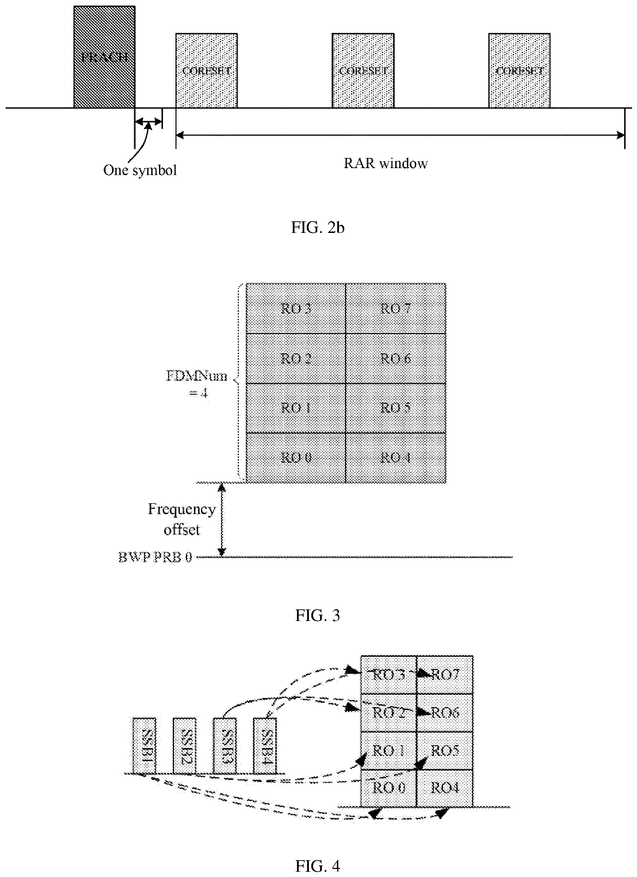

After the UE transmits the preamble, it will listen to a PDCCH (Physical Downlink Control CHannel, Physical Downlink Control CHannel) in an RAR response window (RA Response window, or called RAR window) to receive a corresponding RAR. The format of the PDCCH is DCI (Downlink Control Information, Downlink Control Information) format 1_0 (format 1_0), and the CRC (Cyclic Redundancy Check, Cyclic Redundancy Check) of the PDCCH is scrambled by an RA-RNTI (Random Access-RNTI, Random Access Radio Network Temporary Identifier). The window length of the RAR response window is expressed by the number of time slots. The length is configured by high layer signaling such as a random access response window (ra-ResponseWindow), and the time slot length is determined for a reference subcarrier based on a subcarrier spacing of the Type1-PDCCH (Type 1-PDCCH) common search space set. The RAR time window starts from the Type1-PDCCH CSS (Common Search Space, Common Search Space) set (set) configured for the terminal, and after at least one symbol that follows the last symbol of a PRACH occasion over which the terminal transmits the PRACH (PhysicalRandom Access Channel, PhysicalRandom Access Channel), the terminal receives a CORESET (Control Resource Set, Control Resource Set) with the earliest time position of the PDCCH, and the symbol length of the at least one symbol corresponds to the subcarrier spacing of the Type1-PDCCH CSS set. It can be seen that, after the terminal transmits the PRACH and after an interval of at least one symbol following the last symbol of the RO over which the PRACH is transmitted, the terminal needs to listen, in the RAR window, to the PDCCH that schedules the RAR message. The purpose of the interval of the at least one symbol is to reserve a certain time for the terminal to perform operations such as conversion processing between transmitting and receiving. With reference to FIG. 2b, the timing between the RAR window and the PRACH in NR.

If the UE does not receive the RAR replied by the gNodeB within the RAR response window, it is considered that this random access procedure has failed. When the UE successfully receives the RAR and the preamble index (preamble index) in the RAR is the same as the preamble index transmitted by the UE, it is considered that the UE has successfully received the RAR. At this time, UE may stop listening to the RAR.

One RAR message may contain response messages to multiple users who transmit the preambles. The response message to each user contains an RAPID (Radom AccessPreamble IDentifier, Radom Access Preamble IDentifier), resource allocation information of Msg3 (Message 3), TA adjustment information, a TC-RNTI (Temporary Cell-RNTI, temporary cell wireless network temporary identifier), and the like that are used by the user. In the NR standard, the RAR message is scheduled using the DCI format 1-0.

The UE would do not detect, within the RAR window, the PDCCH DCI format 1-0 whose CRC is scrambled by the RA-RNTI; alternatively, the UE detects the PDCCH DCI format 1-0, but it does not correctly receive a PDSCH (Physical Downlink Shared Channel, Physical Downlink Shared Channel); alternatively, the UE detects the PDSCH, but the high layer of the UE cannot identify, from the RAR carried in the PDSCH, the RAPID of the preamble transmitted by the UE. In these cases, the high layer of the terminal may instruct the physical layer of the terminal to transmit the PRACH again. In a case that the high layer requests to retransmit the PRACH, the UE is expected to transmit the PRACH no later than a time position which is at *N*_{T,1} + 0.75 ms after the last symbol of the RAR window or after the last symbol of the received PDSCH, where *N*_{T,1} is the processing duration *N*₁ symbols required by a UE corresponding to UE processing capability 1 to process the PDSCH. When determining the processing duration *N*₁ symbols, it is assumed that *µ* is the corresponding PDCCH carrying the DCI format 1_0, a corresponding PDSCH configured with an additional DMRS, or a minimum subcarrier spacing of a corresponding PRACH subcarrier spacing. For *µ* = 0, the terminal assumes *N*_{1,0} = 14. For a PRACH with a corresponding subcarrier spacing of 1.25kHz or 5kHz, the terminal assumes *µ* = 0 when determining *N*₁*.*

Step 3: UE transmits Message 3 (Msg3).

If the terminal successfully receives the RAR message, the terminal transmits an Msg3, that is, a PUSCH scheduled by the RAR. Corresponding to the trigger events of the random access, examples of information carried by Msg3 are as follows:
(1) for initial access (initial access), Msg3 is an RRC connection request (Connection Request) transmitted on the CCCH, and it at least needs to carry NAS UE identifier information;
(2) for RRC Connection Re-establishment (RRC Connection Re-establishment), Msg3 is an RRC connection re-establishment request (Connection Re-establishment Request) transmitted on the CCCH (Common Control Channel, Common Control Channel), and it does not carry any NAS (Non Access Structure, Non Access Structure) messages;
(3) for handover (handover), Msg3 is an encrypted and integrity-protected RRC handover confirm (Handover Confirm) transmitted on the DCCH, and it contains the C-RNTI of the UE and needs, if possible, to carry a BSR (Buffer Status Report, Buffer Status Report); and
(4) for other trigger events, at least C-RNTI needs to be carried.

Uplink transmission typically uses UE-specific information, such as C-RNTI, to scramble data of UL-SCH (UpLink Shared Channel, UpLink Shared CHannel). However, the contention has not been resolved at this time, and the scrambling cannot be based on C-RNTI, but on TC-RNTI. In other words, Msg3 only uses TC-RNTI for scrambling.

Step 4: gNodeB transmits a contention resolution (contention resolution) message.

After the terminal transmits the Msg3, the terminal receives a contention resolution message transmitted by the network. Therefore, after transmitting the Msg3, the MAC entity of the terminal may start the following operations:
starting a random access contention resolution timer (ra-ContentionResolutionTimer), and restarting the ra-ContentionResolutionTimer at the first symbol after retransmission of each Msg3; and
listening to the PDCCH during the running of ra-ContentionResolutionTimer, that is, listening to the contention resolution message transmitted by the network.

In step 3, the UE would carry, in Msg3, its own unique identifier: C-RNTI, or a UE identifier from a core network such as S-TMSI (S-Temporary Mobile Subscriber Identity, S-Temporary Mobile Subscriber Identity) or a random number. In the contention resolution mechanism, gNodeB will carry this unique identifier in Msg4 to specify a winning UE. Other UEs that do not win in the contention resolution will re-initiate the random access. The PDCCH of MSG4 uses the TC-RNTI for scrambling.

The configuration of NR PRACH resource is described as follows.

### 1. Period of PRACH resource

On one hand, the period of a PRACH resource affects the delay of random access, and a short PRACH period may shorten the delay of random access. On the contrary, a long PRACH period leads to a prolonged delay of random access. On the other hand, the period of the PRACH resource also affects the resource overhead occupied by the PRACH. NR needs to support beam scanning. To support random access requests from UEs distributed at various beams, the system needs to configure a corresponding PRACH resource for each beam direction. Therefore, compared with LTE, the PRACH resource overhead in NR increases significantly.

Therefore, the NR standard supports the PRACH period of 110, 20, 40, 80, 160} ms (millisecond). The network device may balance the delay, system overhead and other factors, to set an appropriate PRACH period.

### 2. Resource configuration in the PRACH frequency domain

As shown in FIG. 3, in the frequency domain, NR supports a configuration of 1, 2, 4 or 8 PRACH resources of FDM (Frequency-division multiplexing, Frequency-division multiplexing), to expand the PRACH capacity. When more than one PRACH resource is configured in the frequency domain, these PRACH resources are continuously distributed in the frequency domain. The network notifies an offset of the starting PRB (Physical Resource Block, Physical Resource Block) of the first RO resource in frequency domain relative to the starting PRB of the BWP (Bandwidth Part, Bandwidth Part).

### 3. Mapping relationship between SSB and RO

Before the UE initiates the random access, the UE may measure and evaluate the signal quality of a cell and the signal strength of each SSB in the cell. Further, the terminal selects a PRACH occasion based on the mapping relationships between SSBs and PRACH occasions (ROs). When initiating a PRACH, the UE transmits the preamble on a PRACH occasion corresponding to an SSB with the strongest or stronger signal strength. If the network successfully receives the preamble, it may learn the downlink beam information of the UE based on the PRACH occasion where the preamble is located, and then use the beam information for subsequent communication, such as Msg2 (Message 2), Msg4 (Message 4), etc. An example of the mapping relationships between SSBs (Synchronization Signal/Physical Broadcast Channel Block, Synchronization Signal/Physical Broadcast Channel Block, also referred to as SS/PBCH Block) and PRACH occasions may refer to FIG. 4.

### 4. Some parameters used by the PRACH

Taking FR1 as an example, the parameters of a PRACH of NR are shown in Table 1 below.

**Table 1 PRACH preamble (preamble) in FR1**

| Type (Type) | SCS (kHz) | Number of RBs (Number of RBs) | Bandwidth (Bandwidth (MHz)) |
|---|---|---|---|
| Long preamble (long preamble) | 1.25 | 6 | 1.08 |
| | 5 | 24 | 4.32 |
| Short preamble (short preamble) | 15 | 12 | 2.16 |
| | 30 | 12 | 4.32 |

As the channel bandwidth supported by the RedCap terminal is narrower than a bandwidth of a channel width supported by a normal NR terminal, for example, in FR1, the channel bandwidth which 3GPP agrees to support is 20MHz at present. However, under some PRACH parameter combinations, the bandwidth required for transmitting a PRACH may exceed the channel bandwidth supported by the terminal. For example, when a PRACH is configured as a long preamble (preamble) and a subcarrier spacing is 5KHz, the bandwidth occupied by the RO over which the PRACH is transmitted is 4.32MHz. Furthermore, if 8 ROs of FDM are configured in the frequency domain, the 8 ROs will occupy 4.32 * 8=34.56MHz, this bandwidth will exceed the 20MHz channel bandwidth supported by the RedCap terminal.

According to the random access method proposed in the embodiments of the present application, even a narrow-band terminal can perform the random access successfully, for example, transmitting the PRACH successfully.

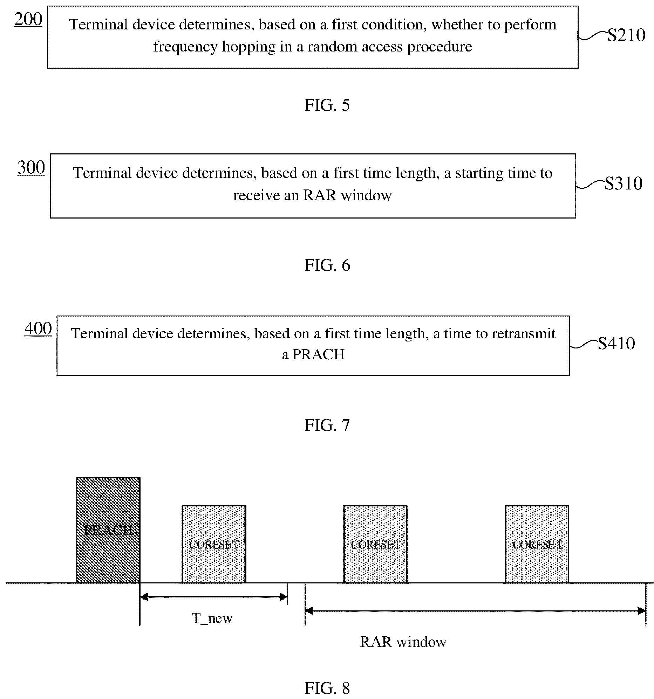

FIG. 5 is a schematic flowchart of a random access method 200 according to an embodiment of the present application. The method may be optionally applied to the system shown in FIG. 1, but is not limited thereto. The method includes at least part of the following contents.

S210, a terminal device determines, based on a first condition, whether to perform frequency hopping in a random access procedure.

Exemplarily, the scenario of frequency hopping may include that: the terminal device transmits (or receives) channels (or signals) at different frequency positions; or the frequency positions where the terminal device transmits and receives channels (or signals) are different.

Optionally, the terminal device determining, based on the first condition, whether to perform frequency hopping in the random access procedure includes: the terminal device determines, based on the first condition, whether the frequency hopping needs to be used to transmit a physical random access channel (PRACH) or receive a random access response (RAR).

In the random access procedure, the terminal device may determine, based on a preset condition, whether the frequency hopping needs to be performed. If the preset condition is met, the terminal device may use the frequency hopping to transmit the PRACH (refer to Message 1 of the random access procedure mentioned above) or receive RAR (refer to Message 2 of the random access procedure mentioned above).

Optionally, the method further includes: in a case that the first condition is met, the terminal device uses the frequency hopping to transmit the PRACH or receive the RAR.

Optionally, the first condition includes that: a total bandwidth occupied by a random access occasion (RO) of frequency division multiplexing (FDM) configured for the terminal device is greater than a first bandwidth.

Optionally, the first bandwidth includes at least one of the following:
a channel bandwidth of the terminal device;
the number of physical resource blocks (PRBs) corresponding to a maximum channel bandwidth supported by the terminal device;
a preset or configured bandwidth;
the number of preset or configured PRBs; and
a bandwidth of an initial uplink (UL) bandwidth part (BWP) of the terminal device.

Optionally, the bandwidth of the initial UL BWP of the terminal device is preset or configured.

Exemplarily, the terminal device transmits a PRACH over a periodically appearing RO configured by a network, and the PRACH is provided with a preamble (preamble, or referred to as preamble) therein. If the total bandwidth occupied by the RO of FDM configured by the network for the terminal device is greater than any one of the first bandwidths mentioned above, the terminal device may use the frequency hopping to transmit the PRACH or receive the RAR.

Optionally, the first condition includes at least one of the following:
a frequency band occupied by an RO of FDM configured for the terminal device is not within a first frequency range; and
an RO selected by the terminal device is not within the first frequency range.

Optionally, the first frequency range is an initial UL BWP of the terminal device.

Optionally, the initial UL BWP is preset, or configured by a network through a system message.

Optionally, the first frequency range is a UL BWP configured for the terminal device, and a bandwidth of the UL BWP configured for the terminal device is greater than a bandwidth of the initial UL BWP.

Optionally, a frequency range of the BWP configured for the terminal device includes a frequency range of the initial UL BWP.

Optionally, the BWP configured for the terminal device is preset, or is configured by a network through a system message.

Exemplarily, if the frequency band occupied by the RO of FDM configured by the network for the terminal device is not within any one of the first frequency ranges mentioned above, or the RO selected by the terminal device is not within any one of the first frequency ranges mentioned above, the terminal device may use the frequency hopping to transmit the PRACH or receive the RAR. The terminal device may select the RO before transmitting the PRACH. For example, reference is made to FIG. 4 and the description related thereto.

Optionally, the method further includes: the terminal device transmits the PRACH or receives the RAR without using the frequency hopping, in a case that a network configures a dedicated RO resource for the terminal device.

Optionally, the dedicated RO resource is within a channel bandwidth of the terminal device or within an initial UL BWP configured for the terminal device.

Optionally, the terminal device is a RedCap terminal.

Exemplarily, the network may configure a dedicated RO resource for the RedCap terminal, where the dedicated RO resource may be different from the RO resource of the NR terminal. For example, the network may configure the dedicated RO resource of the RedCap terminal to be within the channel bandwidth of the RedCap terminal or within the initial UL BWP configured for the RedCap terminal. In this way, during the random access procedure, the RedCap terminal can use the dedicated RO resource to transmit the PRACH or receive the RAR, without performing the frequency hopping.

FIG. 6 is a schematic flowchart of a random access method 300 according to an embodiment of the present application. The method may be optionally applied to the system shown in FIG. 1, but is not limited thereto. The method includes at least part of the following contents.

S310, a terminal device determines, based on a first time length, a starting time to receive a random access response (RAR) window.

Optionally, the first time length is a time length required by the terminal device to perform frequency hopping.

Exemplarily, after the terminal device transmits the PRACH, it needs to perform the frequency hopping to hop back to an initial downlink (DownLink, DL) BWP to receive the RAR. The time length required for the frequency hopping operation may be referred to as a frequency hopping time length, that is, the first time length.

Optionally, the terminal device determining, based on the first time length, the starting time to receive a random access response RAR window includes that: the terminal device determines, based on the first time length and a second time length, the starting time to receive the RAR window.

Optionally, the second time length is one symbol.

Exemplarily, with reference to FIG. 2b, in the random access procedure, the UE uses a configured or preset channel bandwidth to transmit a PRACH or receive an RAR, and does not use the frequency hopping to transmit the PRACH or receive the RAR. The first CORESET, that is after the UE transmits the PRACH and after an interval of at least one symbol following the last symbol of the RO over which the PRACH is transmitted, may be the starting time of the RAR window, where the PDCCH that schedules an RAR message may be listened to during the RAR window. The RAR window may also be referenced as RAR-window, RAR response window, etc. This one symbol is the second time length. Specifically, the starting position of the first CORESET after this one symbol is the starting time of the RAR window. The symbol length of this one symbol corresponds to the subcarrier spacing of the Typel-PDCCH CSS set.

Optionally, the terminal device determining, based on the first time length and the second time length, the starting time to receive the RAR window includes:
the terminal device determines a third time length, based on the first time length and the second time length; and
the terminal device determines, based on the third time length, the starting time to receive the RAR window.

Exemplarily, the first CORESET, that is after the UE transmits the PRACH and that is spaced, by at least the third time length from the last symbol of the RO over which the PRACH is transmitted, may be the starting time of the RAR window. Specifically, the starting position of the first CORESET after at least the third time length is the starting time of the RAR window.

Optionally, the terminal device determining, based on the third time length, the starting time to receive the RAR window includes: in a case that a first condition is met, the terminal device determines, based on the third time length, the starting time to receive the RAR window.

Exemplarily, in the case that the first condition is met, the terminal device may use the frequency hopping to transmit the PRACH or receive the RAR. The terminal determines the third time length, based on the first time length required for performing the frequency hopping and the second time length required for the case of not performing the frequency hopping, and uses the third time length to determine the starting time to receive the RAR window. For details, reference may be made to the related description of the example mentioned above in which the terminal device determines, based on the third time length, the starting time to receive the RAR window.

Optionally, the method further includes: in a case that a first condition is not met, the terminal device determines, based on the second time length, the starting time to receive the RAR window.

Exemplarily, in the case that the first condition is not met, the terminal device transmits the PRACH or receives the RAR without performing the frequency hopping, and may determine, based on the second time length, the starting time to receive the RAR window. For details, reference may be made to FIG. 2b and related description of the example mentioned above in which the terminal device determines, based on the second time length, the starting time to receive the RAR window.

After determining the starting time to receive the RAR window, the terminal device starts to listen to the RAR message from the starting time to receive the RAR window.

Optionally, the first condition includes that: a total bandwidth occupied by a random access occasion RO of frequency division multiplexing FDM configured for the terminal device is greater than a first bandwidth.

Optionally, the first bandwidth includes at least one of the following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

Optionally, the bandwidth of the initial UL BWP of the terminal device is preset or configured.

Optionally, the first condition includes at least one of the following:
a frequency band occupied by an RO of FDM configured for the terminal device is not within a first frequency range; and
an RO selected by the terminal device is not within the first frequency range.

Optionally, the first frequency range is an initial UL BWP of the terminal device.

Optionally, the initial UL BWP is preset, or configured by a network through a system message.

Optionally, the first frequency range is a UL BWP configured for the terminal device, and a bandwidth of the UL BWP configured for the terminal device is greater than a bandwidth of the initial UL BWP.

Optionally, a frequency range of the BWP configured for the terminal device includes a frequency range of the initial UL BWP.

Optionally, the UL BWP configured for the terminal device is preset, or configured by the network through a system message.

Optionally, the method further includes:
in a case that the network configures a dedicated RO resource for the terminal device, the terminal device transmits the PRACH or receive the RAR without using the frequency hopping.

Optionally, the dedicated RO resource is within the channel bandwidth of the terminal device or within the initial UL BWP configured for the terminal device.

Optionally, a method for determining the third time length includes at least one of the following:
the third time length is equal to a sum of the first time length and the second time length;
the third time length is equal to a maximum value of the first time length and the second time length; and
the third time length is greater than the maximum value of the first time length and the second time length, and smaller than the sum of the first time length and the second time length.

Exemplarily, the second time length may be one symbol, and the symbol length of this one symbol corresponds to the subcarrier spacing of the Typel-PDCCH CSS set. If it is determined, based on the maximum value of the first time length and the second time length, that the third time length is equal to the second time length, the third time length may also be one symbol.

Optionally, an NR terminal determines, based on the second time length, the starting time to receive the RAR window, and a RedCap terminal determines, based on the third time length, the starting time to receive the RAR window.

Exemplarily, the NR terminal uses no frequency hopping to receive the RAR, and the RedCap terminal uses the frequency hopping to receive the RAR. The second time length on which the NR terminal is based is different from the third time length on which the RedCap terminal is based.

Exemplarily, the NR terminal determines the starting time to receive the RAR, based on one symbol after transmitting the PRACH. The NR terminal does not need the frequency hopping. For example, the first CORESET, that is after the NR terminal transmits the PRACH and that is spaced, by one symbol, from the last symbol of the RO over which the PRACH is transmitted, may be the starting time of the RAR window. The RedCap terminal may need the frequency hopping. During the frequency hopping, after transmitting the PRACH, the RedCap terminal may determine, based on a time length different from this one symbol, the starting time to receive the RAR. For example, the first CORESET, that is after the RedCap terminal transmits the PRACH and after an interval of a time length different from the one symbol, may be the starting time of the RAR window.

Furthermore, after receiving the PRACH, the network side may determine the timing of the PRACH and/or RAR in the same or similar way as that at the terminal side, and transmit the RAR message.

For example, the network side may use the same or similar way as that at the terminal side to determine the starting time to transmit the RAR window. In this way, the starting time to transmit RAR window determined by the network side may be consistent with the starting time to receive RAR window determined by the terminal side.

For another example, the network side may use the same or similar way as that at the terminal side to determine whether the terminal device uses the frequency hopping to transmit the PRACH. In the case that the terminal device transmits PRACH by using the frequency hopping, the starting time to transmit the RAR window may be determined based on the time length corresponding to the frequency hopping, such as the first time length or the third time length. In this way, the starting time to transmit RAR window determined at the network side may be consistent with the starting time to receive RAR window determined at the terminal side.

In the random access method 300 executed by the terminal device in this embodiment, the same description for the first condition for example as that in the random access method 200 in the embodiment mentioned above has the same meaning. For details, reference may be made to the related description of the method 200, which will not be repeated.

FIG. 7 is a schematic flowchart of a random access method 400 according to an embodiment of the present application. The method may be optionally applied to the system shown in FIG. 1 but is not limited thereto. The method includes at least part of the following contents.

S410, a terminal device determines, based on a first time length, a time to retransmit a physical random access channel (PRACH).

Exemplarily, in some cases, the UE may need to retransmit the PRACH. For example, the UE does not detect the PDCCH DCI format 1-0 whose CRC is scrambled by RA-RNTI in the RAR window. For another example, UE detects the PDCCH DCI format 1-0, but it does not receive the PDSCH correctly. For further example, the UE detects the PDSCH, but the high layer of the UE cannot identify, from the RAR carried in PDSCH, the RAPID of the preamble transmitted by the UE.

Optionally, the first time length is a time length required by the terminal device to perform the frequency hopping.

If the terminal device uses the frequency hopping to transmit a PRACH, in the case that the PRACH is needed to be retransmitted, the terminal device may determine the time to retransmit the PRACH, based on the time length required for performing the frequency hopping.

Optionally, the terminal device determining, based on the first time length, the time to retransmit the PRACH includes: the terminal device determines the time to retransmit the PRACH, based on the first time length and a fourth time length.

Optionally, the fourth time length is determined based on a processing time required for a terminal device corresponding to UE processing capability 1 to process a physical downlink shared channel (PDSCH).

Optionally, the fourth time length is equal to the processing time plus 0.75ms.

Exemplarily, UE uses a configured channel bandwidth to transmit the PRACH, and transmits the PRACH without using the frequency hopping. In a case that the high layer requests to retransmit the PRACH, the UE is expected to transmit the PRACH no later than a time position which is at *N*_{T,1} + 0.75 ms after the last symbol of the RAR window or after the last symbol of the received PDSCH, where *N*_{T,1} is the processing duration *N*₁ symbols required by the UE corresponding to UE processing capability 1 to process the PDSCH. In which, when determining the processing duration *N*₁ symbols, it is assumed that *µ* is the corresponding PDCCH carrying the DCI format 1_0, a corresponding PDSCH configured with an additional DMRS, or a minimum subcarrier spacing of a corresponding PRACH subcarrier spacing. For *µ* = 0, if the UE assumes that *N*_{1,0} = 14 . For a PRACH with a corresponding subcarrier spacing of 1.25 kHz or 5kHz, the UE assumes *µ* = 0 when determining *N*₁.

Optionally, the terminal device determining the time to retransmit the PRACH, based on the first time length and the fourth time length, includes:
the terminal device determines a fifth time length, based on the first time length and the fourth time length; and
the terminal device determines, based on the fifth time length, the time to retransmit the PRACH.

Exemplarily, the UE is expected to transmit the PRACH no later than a time position corresponding to the fifth time length after the last symbol of the RAR window or after the last symbol of the received PDSCH.

Optionally, the terminal device determining, based on the fifth time length, the time to retransmit the PRACH includes: in a case that a first condition is met, the terminal device determines, based on the fifth time length, the time to retransmit PRACH. For details, reference may be made to the related description related to the first condition in the embodiments mentioned above, and the related description mentioned above that the terminal device determines, based on the fifth time length, the time to retransmit PRACH.

Exemplarily, in a case that the first condition is met, the terminal device may use the frequency hopping to transmit a PRACH or receive an RAR. The terminal device determines the fifth time length, based on the first time length required for performing the frequency hopping and the fourth time length required for the case of not performing the frequency hopping, and determines the time to retransmit the PRACH by using the fifth time length.

Optionally, the method further includes:
in a case that the first condition is not met, the terminal device determines, based on the fourth time length, the time to retransmit the PRACH. For details, reference may be made to the related description related to the first condition in the embodiments mentioned above, and the related description mentioned above that the terminal device determines, based on the fourth time length, the time to retransmit the PRACH.

Exemplarily, in the case that the first condition is not met, the terminal device transmits a PRACH or receives an RAR without performing the frequency hopping, and may determine, based on the fourth time length, the time to retransmit the PRACH.

After determining the time to retransmit the PRACH, the terminal device starts to retransmit the PRACH from the time to retransmit the PRACH.

Optionally, the first condition includes:
a total bandwidth occupied by a random access occasion RO of frequency division multiplexing FDM configured for the terminal device is greater than a first bandwidth.

Optionally, the first bandwidth includes at least one of the following:
a channel bandwidth of the terminal device;
the number of physical resource blocks (PRBs) corresponding to a maximum channel bandwidth supported by the terminal device;
a preset or configured bandwidth;
the number of preset or configured PRBs; and
a bandwidth of an initial UL BWP of the terminal device.

Optionally, the bandwidth of the initial UL BWP of the terminal device is preset or configured.

Optionally, the first condition includes at least one of the following:
a frequency band occupied by an RO of FDM configured for the terminal device is not within a first frequency range; and
an RO selected by the terminal device is not within the first frequency range.

Optionally, the first frequency range is an initial UL BWP of the terminal device.

Optionally, the initial UL BWP is preset, or configured by a network through a system message.

Optionally, the first frequency range is a UL BWP configured for the terminal device, and a bandwidth of the UL BWP configured for the terminal device is greater than a bandwidth of the initial UL BWP.

Optionally, a frequency range of the UL BWP configured for the terminal device includes a frequency range of the initial UL BWP.

Optionally, the UL BWP configured for the terminal device is preset, or configured by a network through a system message.

Optionally, the method further includes:
in a case that the network configures a dedicated RO resource for the terminal device, the terminal device transmits the PRACH or receives an RAR without using the frequency hopping.

Optionally, the dedicated RO resource is within a channel bandwidth of the terminal device or within an initial UL BWP configured for the terminal device.

Optionally, a method for determining the fifth time length includes at least one of the following:
the fifth time length is equal to a sum of the first time length and the fourth time length;
the fifth time length is equal to a maximum value of the first time length and the fourth time length; and
the fifth time length is greater than the maximum value of the first time length and the fourth time length, and smaller than the sum of the first time length and the fourth time length.

In the random access method 400 executed by the terminal device in this embodiment, the same description for the first condition for example as that in the random access method 200 of the embodiment mentioned above has the same meaning. For details, reference may be made to the related description of the method 200, which will not be repeated.

In an application scenario, the RedCap narrowband terminal (abbreviated as RedCap terminal) transmits a PRACH through the frequency hopping, and uses a new random access channel timing when performing the frequency hopping.

In the initial access procedure, the uplink channel of the terminal is transmitted in an initial (initial) UL BWP, and a downlink channel or signal is received in an initial (initial) DL BWP. A bandwidth of the initial UL BWP and a bandwidth of the initial DL BWP all need to be smaller than a maximum channel bandwidth supported by the terminal.

In order to enable narrowband terminals to perform random access successfully, for example, to transmit the PRACH successfully, one way is to configure a small number of ROs of FDM in the frequency domain, so that the channel bandwidth or the initial UL BWP of the terminal can cover all ROs. For example, when the PRACH is configured as a long preamble (preamble) and the subcarrier spacing is 5KHz, a bandwidth occupied by the RO over which the PRACH is transmitted is 4.32MHz. If the number of ROs of FDM is configured as 4, the bandwidth occupied by all ROs may be 4.32 * 4=17.28MHz, so that the channel bandwidth or the initial UL BWP of the terminal contains all ROs. However, on one hand, this way limits the number of ROs of FDM and affects the available PRACH capacity of the RedCap terminal. On the other hand, in some network deployment scenarios, the NR terminal may share an RO with the RedCap terminal. If the number of ROs of FDM is still limited, the number of PRACHs of the NR terminal will also be affected. The flexibility of configuring PRACH resources by the network is affected.

Another way is to use a reasonable frequency hopping mechanism, so that even if the bandwidth occupied by all configured ROs exceeds the channel bandwidth or the initial UL BWP of the terminal, the PRACH can also be transmitted, through the frequency hopping, on an RO selected by the terminal. In this way, it is possible to enable the RedCap terminal to sharean RO resource with the NR terminal, without configuring a dedicated RO resource for the RedCap terminal. For the RedCap terminal, an RO resource configured for the NR terminal of Rel-15 or Rel-16 may be read from system information.

### Example 1

The terminal determines whether frequency hopping is required for transmitting the PRACH. Specifically, the terminal may determine whether the frequency hopping is required when the terminal transmits the PRACH (or receives the RAR), based on the following possible approaches.

Approach 1: the terminal determines whether a total bandwidth occupied by an configured RO of FDM is greater than a first bandwidth.

Examples of the first bandwidth are as follows.

Exemplarily, the first bandwidth may be a channel bandwidth of the terminal. For example, in FR1, when the maximum channel bandwidth supported by the terminal is 20MHz, the first bandwidth is 20MHz.

Exemplarily, the first bandwidth may also be the number of PRBs corresponding to the maximum channel bandwidth supported by the terminal. Corresponding to different subcarrier spacing, the number of PRBs may be different. The following Table 2 gives a possible example of the number NRB of PRBs corresponding to the maximum channel bandwidth supported by the terminal when the maximum channel bandwidth supported by the terminal is 20MHz.

**Table 2 The number of PRBs corresponding to the maximum channel bandwidth of 20MHz at different subcarrier spacing**

| SCS (kHz) | 20 MHz |
|---|---|
| | NRB |
| 15 | 106 |
| 30 | 51 |
| 60 | 24 |

Exemplarily, the first bandwidth may also be a certain preset or configured bandwidth or the number of PRBs. Corresponding to different subcarrier spacing, the number of PRBs may be different.

For example, in FR1, when the maximum channel bandwidth supported by the terminal is 20MHz, the certain preset or configured bandwidth is 18MHz. Considering that a certain guard band is typically reserved on both sides of the bandwidth of the terminal, the bandwidth typically needs to be no more than 20MHz.

Exemplarily, the first bandwidth may be a bandwidth of an initial UL BWP configured for the RedCap terminal. For example, in FR1, when the maximum channel bandwidth supported by the terminal is 20MHz, the bandwidth of the initial UL BWP configured for the terminal is 96 PRBs (subcarrier spacing is 15KHz).

It should be noted here that the RedCap terminal may share the same initial UL BWP with a traditional NR terminal, or it may use the initial UL BWP separately configured by the system for the RedCap terminal.

This separately configured initial UL BWP may be preset, or configured by a network through a system message (e.g., SIB1).

If the terminal determines that the total bandwidth occupied by the configured RO of FDM is greater than the first bandwidth, the terminal may need to transmit the PRACH through the frequency hopping. Otherwise, the terminal does not need to use the frequency hopping to transmit the PRACH.

Approach 2: the terminal determines whether the frequency bands occupied by the configured RO of FDM are all within a first frequency range.

Examples of the first frequency range are as follows.

Exemplarily, the first frequency range may be an initial UL BWP configured for the RedCap terminal.

Exemplarily, the first frequency range may also be a UL BWP configured for the terminal. It may also be referred to as PRACH BWP, that is, a BWP used to transmit a PRACH. Optionally, a bandwidth of the PRACH BWP is greater than a bandwidth of the initial UL BWP. A frequency range of the PRACH BWP includes a frequency range of the initial UL BWP.

The initial UL BWP and the UL BWP configured for the terminal may be preset, or configured by a network through a system message (e.g., SIB 1).

If the terminal determines that the frequency band occupied by the configured RO of FDM is within the first frequency range, the terminal transmits the PRACH without performing the frequency hopping; otherwise, the terminal needs to use the frequency hopping to transmit the PRACH.

Approach 3: the terminal determines whether an RO selected in the random access procedure is within the first frequency range.

Regarding the first frequency range, reference may be made to related description in approach 2.

Before transmitting a PRACH, the terminal measures SSBs, and selects an RO corresponding to an SSB with a strong signal strength. The terminal transmits the PRACH on the selected RO.

If the terminal determines whether the RO selected in the random access procedure is within the first frequency range, the terminal transmits the PRACH without performing the frequency hopping; otherwise, the terminal needs to perform the frequency hopping to transmit the PRACH.

Approach 4: whether a network configures a dedicated RO resource to the RedCap terminal.

A network may configure a dedicated RO resource to the RedCap terminal, so that the configured RO resource is within the channel bandwidth of the RedCap terminal or within the initial UL BWP configured for the RedCap terminal. In this way, the RedCap terminal can use the dedicated RO resource to realize the normal random access procedure without performing the frequency hopping.

Optionally, approaches 1, 2, 3 and 4 mentioned above may be used independently or in combination. For example, approach 3 and approach 4 may be used in combination. For example, when the network configures a dedicated RO resource to the RedCap terminal or does not configure a dedicated resource to the RedCap terminal, as long as that the terminal determines that the RO selected in the random access procedure is within the first frequency range, the terminal does not need the frequency hopping operation.

### Example 2

The terminal determines the timing in the random access procedure, based on whether the frequency hopping is performed. Specifically, the terminal determines, based on various approaches in Example 1, whether the terminal needs to perform the frequency hopping when transmitting a PRACH (or receiving an RAR). Then, the starting time to receive the RAR window or the time to retransmit the PRACH in the random access procedure is determined based on whether the frequency hopping is performed.

In an initial access procedure, the terminal typically works in an initial UL BWP/initial DL BWP. Based on Example 1, when the bandwidth occupied by all configured ROs exceeds the channel bandwidth or the initial UL BWP of the terminal, the terminal may transmit a PRACH through the frequency hopping. That is, the terminal may transmit the PRACH at the initial UL BWP configured for it.

For a time division duplexing (Time Division Duplexing, TDD) system, a central frequency point of the initial UL BWP and a central frequency point of the initial DL BWP are consistent. Therefore, before transmitting the PRACH, the terminal may need to perform the frequency hopping to hop from the initial UL BWP to the RO of the PRACH to be transmitted. After transmitting the PRACH, the terminal also needs to perform the frequency hopping to hop back to the initial UL BWP/initial DL BWP, and receive an RAR in the initial DL BWP. If the terminal successfully receives the RAR, the terminal transmits msg3 in the initial UL BWP.
1. New timing between a PRACH and an RAR window, referring to FIG. 8.

Since the terminal, after transmitting a PRACH, needs to perform the frequency hopping to hop back to the initial DL BWP to receive the RAR, the frequency hopping operation would introduce a hopping time T_hop. Therefore, it is necessary to determine, based on the hopping time T_hop, the time for the terminal to receive the RAR. As shown in FIG. 2b, in the related art, after transmitting the PRACH, the terminal can start an RAR window only after a processing time of one symbol, and listen, within the RAR window, to a PDCCH DCI format 1_0 that schedules the RAR response message. Therefore, after the terminal further needs to perform the frequency hopping operation, a timing interval T_New between the PRACH transmitted by the terminal and the starting time of the RAR window needs to comprehensively consider the time T_hop introduced by the frequency hopping and a processing time T_current of one symbol after normally transmitting the PRACH, as shown in FIG. 2b.

In general, T_New depends on the duration of T_Hop and UE implementation, and T_New has the following possibilities:
T_new = T_hop +T_current; in this way, the frequency hopping operation of the terminal and the processing of receiving the RAR both are performed sequentially in series;
T_new = max(T_hop, T_current), where "max" means taking a maximum value. In this way, the frequency hopping operation of the terminal and the processing of receiving the RAR are processed in parallel;
T_new = T_new', T_new'>T_hop, and T_new' > T_current. Optionally, T_new' < T_hop +T_current. In this way, a part of operations in the frequency hopping process (for example, an operation of the frequency hopping that causes an interruption of baseband processing) and the processing of receiving the RAR need to be processed in series, while the other part of the operations in the frequency hopping process (for example, an operation of the frequency hopping whose delay in the process does not affect the operation of the baseband) and the processing of receiving the RAR are processed in series.

After transmitting a preamble, the terminal listens to a PDCCH within the RAR response window (RA Response window) to receive a corresponding RAR, where the format of the PDCCH is DCI format 1_0, and the CRC of which is scrambled by an RA-RNTI. The window length of the RAR response window is expressed by the number of time slots, where the length is configured by a high layer signaling ra-ResponseWindow, and the slot length is determined for the reference subcarrier based on the subcarrier spacing of the Type1-PDCCH common search space set. The RAR response window starts from the Typel-PDCCH CSS set configured for the terminal, and after at least T_new following the last symbol of the PRACH occasion over which the terminal transmits the PRACH, the terminal receives a CORESET with the earliest time position of PDCCH, and the symbol length of the at least one symbol corresponds to the subcarrier spacing of the Typel-PDCCH CSS set. The expression of T_new may be in an absolute time, or it may be expressed in a specific subcarrier spacing, such as 15KHz, 30KHz, etc.

### 2. New timing to retransmit a PRACH

The terminal may need to transmit the PRACH again in some scenarios: for example, the UE does not detect, in the RAR window, the PDCCH DCI format 1-0 whose CRC is scrambled by RA-RNTI; alternatively, the UE detects the PDCCH DCI format 1-0, but it does not receive the PDSCH correctly; alternatively, the UE detects the PDSCH, but the high layer of the UE cannot identify, from the RAR carried in the PDSCH, the RAPID of the preamble transmitted by the UE. In these cases, the high layer of the terminal may instruct the physical layer of the terminal to transmit the PRACH again. The operations of the terminal under these scenarios are performed in the initial DL BWP, and under TDD, the center frequency point of the initial UL BWP is consistent with the center frequency point of the initial DL BWP. Thus, if it is necessary to transmit the PRACH again and the terminal needs to transmit the PRACH through the frequency hopping (for example, based on the determination rule in Example 1), the determination of the time to retransmit the PRACH by the terminal needs to be based on the hopping time T_hop.

In the related art, in a case that the high layer requests to retransmit the PRACH, the UE is expected to transmit the PRACH no later than a time position which is at *N*_{T,1} + 0.75 ms after the last symbol of the RAR window or after the last symbol of the received PDSCH, where *N*_{T,1} is the processing duration *N*₁ symbols required by a UE corresponding to UE processing capability 1 to process the PDSCH. In which, when determining the processing duration *N*₁ symbols, it is assumed that *µ* is the corresponding PDCCH carrying DCI format 1_0, a corresponding PDSCH configured with an additional DMRS, or a minimum subcarrier spacing of a corresponding PRACH subcarrier spacing. For *µ* = 0, the terminal assumes *N*_{1,0} = 14. For a PRACH with a corresponding subcarrier spacing of 1.25kHz or 5kHz, the terminal assumes *µ* = 0 when determining *N*₁.

Therefore, after considering the hopping time T_hop, the timing mentioned above may be modified as follows:
in a case that the high layer requests to retransmit the PRACH, the UE is expected to transmit the PRACH no later than a time position which is at T_new2 after the last symbol of the RAR window or after the last symbol of the received PDSCH.

Where the method for determining T_new2 is exemplified as follows:
T_new2 = T_hop + T_current2; in this way, the frequency hopping operation of the terminal and the processing operation without frequency hopping of the terminal may be performed successively in series;
T_new2 = max(T_hop, T_current2), where "max" means taking a maximum value. In this way, the frequency hopping operation of the terminal and the processing operation without frequency hopping of the terminal may be processed in parallel;
T_new2 = T_new2', T_new2'>T_hop, and T_new2' > T_current2. Optionally, T_new2' <T_hop + T_current2. In this way, a part of operations in the frequency hopping process (for example, an operation of the frequency hopping that cases an interruption of baseband processing) and the processing operation without frequency hopping are processed in series, while the other part of the operations in the frequency hopping process (for example, an operation of the frequency hopping whose delay in the process does not affect the operation of the baseband) and the processing operation without frequency hopping are processed in series.

Where, T_current2 = *N*_{T,1} +0.75 ms, where the meaning of *N*_{T,1} may refer to the related description mentioned above.

In addition, regarding the use of the above two new timings, all RedCap terminals may use the above new timings, regardless of whether or not they perform the frequency hopping when transmitting the PRACH or receiving the RAR message, with reference to FIG. 8. Alternatively, the new timings mentioned above is used only for terminals that require performing the frequency hopping operation; and for terminals that do not require performing the frequency hopping operation, the timing shown in FIG. 2b for example is used.

According to the random access method proposed in the embodiments of the present application, for the narrowband RedCap terminals, the PRACH resource in a PRACH resource set that is configured by a network and exceeds the terminal' own bandwidth, can be used for performing the random access. When the frequency hopping operation is involved in the random access procedure, a new timing relationship is designed between the related channels in the random access procedure, so that the terminal can successfully implement the required frequency hopping operation. With the methods of the embodiments of the present application, in the case that the PRACH resource configured by the network exceeds the bandwidth of the RedCap terminal, the RedCap terminal can still share the PRACH resource with the traditional NR terminal, thereby realizing resource sharing and improving the system efficiency.

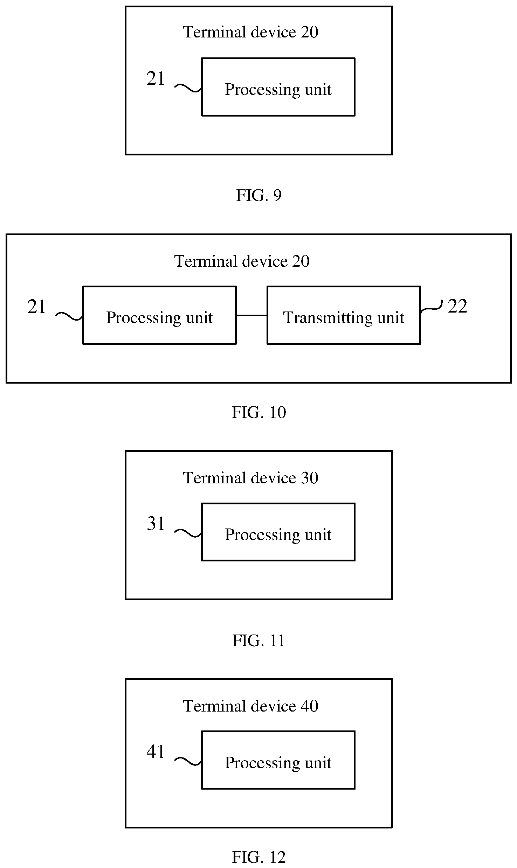

FIG. 9 is a schematic block diagram of a terminal device 20 according to an embodiment of the present application. The terminal device 20 may include:
a processing unit 21, configured to determine, based on a first condition, whether to perform frequency hopping in a random access procedure.

Optionally, the processing unit is further configured to determine, based on the first condition, whether the frequency hopping needs to be used to transmit a physical random access channel PRACH or receive a random access response RAR.

Optionally, as shown in FIG. 10, the terminal device further includes:
a transmitting unit 22, configured to use the frequency hopping to transmit the PRACH or receive the RAR, in a case that the first condition is met.

Optionally, the first condition includes that: a total bandwidth occupied by a random access occasion RO of frequency division multiplexing FDM configured for the terminal device is greater than a first bandwidth.

Optionally, the first bandwidth includes at least one of the following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

Optionally, the bandwidth of the initial UL BWP of the terminal device is preset or configured.

Optionally, the first condition includes at least one of the following:
a frequency band occupied by an RO of FDM configured for the terminal device is not within a first frequency range; and
an RO selected by the terminal device is not within the first frequency range.

Optionally, the first frequency range is an initial UL BWP of the terminal device.

Optionally, the initial UL BWP is preset, or configured by a network through a system message.

Optionally, the first frequency range is a UL BWP configured for the terminal device, and a bandwidth of the UL BWP configured for the terminal device is greater than a bandwidth of the initial UL BWP.

Optionally, a frequency range of the UL BWP configured for the terminal device includes a frequency range of the initial UL BWP.

Optionally, the UL BWP configured for the terminal device is preset, or configured by the network through a system message.

Optionally, the processing unit is further configured to transmit the PRACH or receive the RAR without using the frequency hopping, in a case that the network configures a dedicated RO resource for the terminal device.

Optionally, the dedicated RO resource is within a channel bandwidth of the terminal device or within the initial UL BWP configured for the terminal device.

Optionally, the terminal device is a RedCap terminal.

The terminal device 20 in the embodiment of the present application can realize the corresponding functions of the terminal device in the method embodiments mentioned above. Regarding flows, functions, implementations and beneficial effects corresponding to respective modules (sub-modules, units or components, etc.) in the terminal device 20, reference may be made to the corresponding descriptions in the method embodiments mentioned above, which will not be repeated here. It should be noted that the functions described with regard to the respective modules (sub-modules, units or components, etc.) in the terminal device 20 of the embodiments of the present application may be implemented by different modules (sub-modules, units or components, etc.) or a same module (sub-module, unit or component, etc.).

FIG. 11 is a schematic block diagram of a terminal device 30 according to an embodiment of the present application. The terminal device 30 may include:
a processing unit 31, configured to determine, based on a first time length, a starting time to receive a random access response RAR window.

Optionally, the first time length is a time length required by the terminal device to perform the frequency hopping.

Optionally, the processing unit 31 is further configured for determining, based on the first time length and a second time length, the starting time to receive the RAR window.

Optionally, the second time length is one symbol.

Optionally, the processing unit 31 is further configured to determine, based on the first time length and the second time length, a third time length; and determine, based on the third time length, the starting time to receive the RAR window.

Optionally, regarding the processing unit 31 being further configured to determine, based on the third time length, the starting time to receive the RAR window, it includes: in a case that a first condition is met, determining, based on the third time length, the starting time to receive the RAR window.

Optionally, the processing unit 31 is further configured to determine, by the terminal device, the starting time to receive the RAR window based on the second time length, in a case that the first condition is not met.

Optionally, the first condition includes that: a total bandwidth occupied by a random access occasion RO of frequency division multiplexing FDM configured for the terminal device is greater than a first bandwidth.

Optionally, the first bandwidth includes at least one of the following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

Optionally, the bandwidth of the initial UL BWP of the terminal device is preset or configured.

Optionally, the first condition includes at least one of the following:
a frequency band occupied by an RO of FDM configured for the terminal device is not within a first frequency range; and
an RO selected by the terminal device is not within the first frequency range.

Optionally, the first frequency range is an initial UL BWP of the terminal device.

Optionally, the initial UL BWP is preset, or configured by a network through a system message.

Optionally, the first frequency range is a UL BWP configured for the terminal device, and a bandwidth of the UL BWP configured for the terminal device is greater than a bandwidth of the initial UL BWP.

Optionally, a frequency range of the UL BWP configured for the terminal device includes a frequency range of the initial UL BWP.

Optionally, the UL BWP configured for the terminal device is preset, or configured by a network through a system message.

Optionally, the processing unit is further configured to use no frequency hopping to transmit a PRACH or receive an RAR, in a case that a network configures a dedicated RO resource for the terminal device.

Optionally, the dedicated RO resource is within a channel bandwidth of the terminal device or within an initial UL BWP configured for the terminal device.

Optionally, a method for determining the third time length includes at least one of the following:
the third time length is equal to a sum of the first time length and the second time length;
the third time length is equal to a maximum value of the first time length and the second time length; and
the third time length is greater than the maximum value of the first time length and the second time length, and smaller than the sum of the first time length and the second time length.

Optionally, an NR terminal determines the starting time to receive the RAR window based on the second time length, and a RedCap terminal determines the starting time to receive the RAR window based on the third time length.

The terminal device 30 in the embodiment of the present application can realize the corresponding functions of the terminal device in the method embodiments mentioned above. Regarding flows, functions, implementations and beneficial effects corresponding to respective modules (sub-modules, units or components, etc.) in the terminal device 30, reference may be made to the corresponding descriptions in the method embodiments mentioned above, which will not be repeated here. It should be noted that the functions described with regard to the respective modules (sub-modules, units or components, etc.) in the terminal device 30 of the embodiments of the present application may be implemented by different modules (sub-modules, units or components, etc.) or a same module (sub-module, unit or component, etc.).

FIG. 12 is a schematic block diagram of a terminal device 40 according to an embodiment of the present application. The terminal device 40 may include:
a processing unit 41, configured to determine, based on a first time length, a time to retransmit a physical random access channel PRACH.

Optionally, the first time length is a time length required by the terminal device to perform the frequency hopping.

Optionally, the processing unit is further configured to determine, based on the first time length and a fourth time length, the time to retransmit the PRACH.

Optionally, the fourth time length is determined based on a processing time required for a terminal device corresponding to UE processing capability 1 to process a physical downlink shared channel PDSCH.

Optionally, the fourth time length is equal to the processing time plus 0.75ms.

Optionally, the processing unit 41 is further configured to determine, based on the first time length and the fourth time length, a fifth time length; and determine, based on the fifth time length, the time to retransmit the PRACH.

Optionally, the processing unit 41 is further configured to determine, based on the fifth time length, the time to retransmit the PRACH, in a case that a first condition is met.

Optionally, the processing unit 41 is further configured to determining, based on the fourth time length, the time to retransmit the PRACH, in a case that the first condition is not met.

Optionally, the first condition includes that: a total bandwidth occupied by a random access occasion RO of frequency division multiplexing FDM configured for the terminal device is greater than a first bandwidth.

Optionally, the first bandwidth includes at least one of the following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

Optionally, the bandwidth of the initial UL BWP of the terminal device is preset or configured.

Optionally, the first condition includes at least one of the following:
a frequency band occupied by an RO of FDM configured for the terminal device is not within a first frequency range; and
an RO selected by the terminal device is not within the first frequency range.

Optionally, the first frequency range is an initial UL BWP of the terminal device.

Optionally, the initial UL BWP is preset, or configured by a network through a system message.

Optionally, the first frequency range is a UL BWP configured for the terminal device, and a bandwidth of the UL BWP configured for the terminal device is greater than a bandwidth of the initial UL BWP.

Optionally, a frequency range of the UL BWP configured for the terminal device includes a frequency range of the initial UL BWP.

Optionally, the UL BWP configured for the terminal device is preset, or configured by a network through a system message.

Optionally, the processing unit 41 is further configured to use no frequency hopping to transmit the PRACH or receive an RAR, in a case that a network configures a dedicated RO resource for the terminal device.

Optionally, the dedicated RO resource is within a channel bandwidth of the terminal device or within an initial UL BWP configured for the terminal device.

Optionally, a method for determining the fifth time length includes at least one of the following:
the fifth time length is equal to a sum of the first time length and the fourth time length;
the fifth time length is equal to a maximum value of the first time length and the fourth time length; and
the fifth time length is greater than the maximum value of the first time length and the fourth time length, and smaller than the sum of the first time length and the fourth time length.

The terminal device 40 in the embodiment of the present application can realize the corresponding functions of the terminal device in the method embodiments mentioned above. Regarding flows, functions, implementations and beneficial effects corresponding to respective modules (sub-modules, units or components, etc.) in the terminal device 40, reference may be made to the corresponding descriptions in the method embodiments mentioned above, which will not be repeated here. It should be noted that the functions described with regard to the respective modules (sub-modules, units or components, etc.) in the terminal device 40 of the embodiments of the present application may be implemented by different modules (sub-modules, units or components, etc.) or a same module (sub-module, unit or component, etc.).

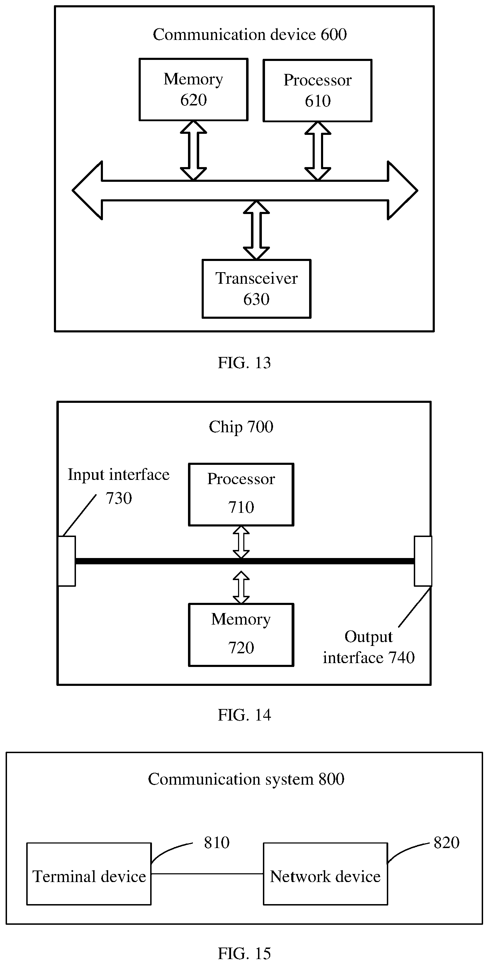

FIG. 13 is a schematic structural diagram of a communication device 600 according to an embodiment of the present application. The communication device 600 includes a processor 610, and the processor 610 may invoke a computer program from a memory, and run the computer program to enable the communication device 600 to implement the method in the embodiments of the present application.

Optionally, the communication device 600 may further include a memory 620. The processor 610 may invoke a computer program from the memory 620, and run the computer program to enable the communication device 600 to implement the method in the embodiments of the present application.

The memory 620 may be a separate device independent of the processor 610 or may be integrated into the processor 610.

Optionally, the communication device 600 may further include a transceiver 630, and the processor 610 may control the transceiver 630 to communicate with other devices. Specifically, the transceiver may transmit information or data to other devices or receive information or data sent by other devices.

The transceiver 630 may include a transmitter and a receiver. The transceiver 630 may further include an antenna, and the number of the antennas may be one or more.

Optionally, the communication device 600 may be a network device in the embodiment of the present application, and the communication device 600 may implement the corresponding processes implemented by the network device in each method of the embodiments of the present application, which will not be repeated here for the sake of conciseness.

Optionally, the communication device 600 may be a terminal device of the embodiment of the present application, and the communication device 600 may implement the corresponding processes implemented by the terminal device in each method of the embodiments of the present application, which will not be repeated for the sake of conciseness.

FIG. 14 is a schematic structural diagram of a chip 700 according to an embodiment of the present application. The chip 700 includes a processor 710, and the processor 710 may invoke a computer program from a memory, and run the computer program to implement the method in the embodiment of the present application.

Optionally, the chip 700 may further include a memory 720. The processor 710 may invoke a computer program from the memory 720, and run the computer program to implement the method executed by the terminal device or the network device in the embodiments of the present application.

The memory 720 may be a separate device independent of the processor 710 or may be integrated into the processor 710.

Optionally, the chip 700 may further include an input interface 730. The processor 710 may control the input interface 730 to communicate with other devices or chips, and specifically, it may acquire information or data sent by other devices or chips.

Optionally, the chip 700 may further include an output interface 740. The processor 710 may control the output interface 740 to communicate with other devices or chips, and specifically, it may output information or data to other devices or chips.

Optionally, the chip may be applied to the network device in the embodiments of the present application, and the chip may implement the corresponding processes implemented by the network device in each method of the embodiments of the present application, which will not be repeated for the sake of conciseness.

Optionally, the chip may be applied to the terminal device in the embodiments of the present application, and the chip may implement the corresponding processes implemented by the terminal device in each method of the embodiments of the present application, which will not be repeated for the sake of conciseness.

The chips applied to the network device and the terminal device may be the same chip or different chips.

It should be understood that the chip mentioned in the embodiment of the present application may also be referred to as a system-level chip, a system chip, a chip system, or a system-on-chip, etc.

The processors mentioned above may be a general-purpose processor, a digital signal processor (digital signal processor, DSP), a field programmable gate array (field programmable gate array, FPGA), an application specific integrated circuit (application specific integrated circuit, ASIC) or other programmable logic devices, transistor logic devices, discrete hardware components, etc. The general-purpose processor mentioned above may be a microprocessor or any conventional processor and so on.

The memory mentioned above may be a volatile memory or a non-volatile memory, or may include both the volatile memory and the non-volatile memory. The non-volatile memory may be a read-only memory (Read-Only Memory, ROM), a programmable read-only memory (programmable ROM, PROM), an erasable programmable read-only memory (erasable PROM, EPROM), and an electrically erasable programmable read-only memory (electrically EPROM, EEPROM) or a flash memory. The volatile memory may be a random access memory (random access memory, RAM).

It should be understood that the above memory is illustrative but not restrictive, for example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), and a direct rambus random access memory (Direct Rambus RAM, DR RAM), etc. That is to say, the memories in the embodiments of the present application are intended to include, but are not limited to, these and any other suitable types of memories.

FIG. 15 is a schematic block diagram of a communication system 800 according to an embodiment of the present application. The communication system 800 includes a terminal device 810 and a network device 820.

In a possible implementation, the terminal device 810 is configured to determine, based on a first condition, whether to perform frequency hopping in a random access procedure.

In a possible implementation, the terminal device 810 is configured to determine, based on a first time length, a starting time to receive an RAR window.

In a possible implementation, the terminal device 810 is configured to determine, based on a first time length, a time to retransmit a PRACH.

The network device 820 may be configured to receive a PRACH from the terminal device or transmit an RAR to the terminal device.

The terminal device 810 may be configured to implement the corresponding functions implemented by the terminal device in the methods mentioned above, and the network device 820 may be configured to implement the corresponding functions implemented by the network device in the methods mentioned above, which will not be repeated herein for the sake of conciseness.

In the embodiments mentioned above, they may be implemented wholly or partially by software, hardware, firm ware or any combination thereof. When implemented in software, they may be implemented in the form of a computer program product in whole or in part. The computer program product includes one or more computer instructions. When the computer program instructions are loaded and executed on a computer, the flow or function according to the embodiments of the present application is generated in whole or in part. The computer may be a general-purpose computer, a special purpose computer, a computer network, or other programmable devices. The computer instructions may be stored in a computer-readable storage medium or transmitted from one computer-readable storage medium to another one. For example, the computer instructions may be transmitted from one website, computer, server or data center to another website, computer, server, or data center, through wired means (e.g., a coaxial cable, an optical fiber, a digital subscriber line (Digital Subscriber Line, DSL)) or wireless means (e.g., infrared, wireless, and microwave). The computer-readable storage medium may be any available medium that a computer can access, or a data storage device such as an integrated server or data center containing one or more available media. The available medium may be a magnetic medium (e.g., a floppy disk, a hard disk, a tape), an optical medium (e.g., a DVD), or a semiconductor medium (e.g., a solid state disk (Solid State Disk, SSD)) and so on.

It should be understood that, in various embodiments of the present application, the number of the above-mentioned procedures does not mean the sequential order of execution, and the execution order of each procedure should be determined by its function and internal logic, which should not impose any restriction on the implementation processes of the embodiments of the present application.

Those skilled in the art may clearly understand that, for the convenience and simplicity of description, the specific working process of the above-described systems, devices and units may refer to the corresponding process in the above method embodiments, which will not be repeated here.

The above merely describes specific implementations of the present application, but the scope of protection of the present application is not limited thereto. Changes or substitutions, that may easily be conceived by those familiar with the art within the technical scope disclosed in the present application, should be covered by the scope of protection of the present application. Therefore, the scope of protection of the present application should be subject to the scope of protection of the claims.

## Claims

1. A random access method, comprising:
determining, by a terminal device and based on a first condition, whether to perform frequency hopping in a random access procedure.

2. The method according to claim 1, wherein the determining, by a terminal device and based on a first condition, whether to perform frequency hopping in a random access procedure comprises:
determining, by the terminal device and based on the first condition, whether the frequency hopping needs to be used to transmit a physical random access channel PRACH or receive a random access response RAR.

3. The method according to claim 2, wherein the method further comprises:
transmitting the PRACH or receiving the RAR, by the terminal device with the frequency hopping, in a case that the first condition is met.

4. The method according to any one of claims 1 to 3, wherein the first condition comprises:
a total bandwidth occupied by a random access occasion RO of frequency division multiplexing FDM configured for the terminal device is greater than a first bandwidth.

5. The method according to claim 4, wherein the first bandwidth comprises at least one of following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

6. The method according to claim 5, wherein the bandwidth of the initial UL BWP of the terminal device is preset or configured.

7. The method according to any one of claims 1 to 3, wherein the first condition comprises at least one of following:
a frequency band occupied by an RO of FDM configured for the terminal device is out of a first frequency range; and
an RO selected by the terminal device is out of the first frequency range.

8. The method according to claim 7, wherein the first frequency range is an initial UL BWP of the terminal device.

9. The method according to claim 8, wherein the initial UL BWP is preset, or configured by a network through a system message.

10. The method according to claim 7, wherein the first frequency range is a UL BWP configured for the terminal device, and a bandwidth of the UL BWP configured for the terminal device is greater than a bandwidth of an initial UL BWP.

11. The method according to claim 10, wherein a frequency range of the UL BWP configured for the terminal device comprises a frequency range of the initial UL BWP.

12. The method according to claim 10 or 11, wherein the UL BWP configured for the terminal device is preset, or configured by a network through a system message.

13. The method according to any one of claims 1 to 12, wherein the method further comprises:
transmitting a PRACH or receiving an RAR, by the terminal device without using the frequency hopping, in a case that a network configures a dedicated RO resource for the terminal device.

14. The method according to claim 13, wherein the dedicated RO resource is within a channel bandwidth of the terminal device or within an initial UL BWP configured for the terminal device.

15. The method according to any one of claims 1 to 14, wherein the terminal device is a Redcap terminal.

16. A random access method, comprising:
determining, by a terminal device, a starting time to receive a random access response RAR window, based on a first time length.

17. The method according to claim 16, wherein the first time length is a time length required by the terminal device to perform frequency hopping.

18. The method according to claim 16 or 17, wherein the determining, by a terminal device, a starting time to receive a random access response RAR window based on a first time length comprises:
determining, by the terminal device, the starting time to receive the RAR window, based on the first time length and a second time length.

19. The method according to claim 18, wherein the second time length is one symbol.

20. The method according to claim 18 or 19, wherein the determining, by the terminal device, the starting time to receive the RAR window, based on the first time length and a second time length, comprises:
determining, by the terminal device, a third time length, based on the first time length and the second time length; and
determining, by the terminal device, the starting time to receive the RAR window based on the third time length.

21. The method according to claim 20, wherein the determining, by the terminal device, the starting time to receive the RAR window based on the third time length comprises:
determining, by the terminal device, the starting time to receive the RAR window based on the third time length, in a case that a first condition is met.

22. The method according to claim 20 or 21, wherein the method further comprises:
determining, by the terminal device, the starting time to receive the RAR window based on the second time length, in a case that the first condition fails to be met.

23. The method according to claim 21 or 22, wherein the first condition comprises:
a total bandwidth occupied by a random access occasion RO of frequency division multiplexing FDM configured for the terminal device is greater than a first bandwidth.

24. The method according to claim 23, wherein the first bandwidth comprises at least one of following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

25. The method according to claim 24, wherein the bandwidth of the initial UL BWP of the terminal device is preset or configured.

26. The method according to claim 21 or 22, wherein the first condition comprises at least one of following:
a frequency band occupied by an RO of FDM configured for the terminal device is out of a first frequency range; and
an RO selected by the terminal device is out of the first frequency range.

27. The method according to claim 26, wherein the first frequency range is an initial UL BWP of the terminal device.

28. The method according to claim 27, wherein the initial UL BWP is preset, or configured by a network through a system message.

29. The method according to claim 28, wherein the first frequency range is a UL BWP configured for the terminal device of the terminal device, and a bandwidth of the UL BWP configured for the terminal device is greater than a bandwidth of the initial UL BWP.

30. The method according to claim 29, wherein a frequency range of the UL BWP configured for the terminal device comprises a frequency range of the initial UL BWP.

31. The method according to claim 29 or 30, wherein the UL BWP configured for the terminal device is preset, or configured by a network through a system message.

32. The method according to any one of claims 21 to 31, wherein the method further comprises:
transmitting a PRACH or receiving an RAR, by the terminal device without using the frequency hopping, in a case that a network configures a dedicated RO resource for the terminal device.

33. The method according to claim 32, wherein the dedicated RO resource is within a channel bandwidth of the terminal device or within an initial UL BWP configured for the terminal device.

34. The method according to any one of claims 20 to 33, wherein the third time length is determined in at least one of following ways:
the third time length is equal to a sum of the first time length and the second time length;
the third time length is equal to a maximum value of the first time length and the second time length; and
the third time length is greater than the maximum value of the first time length and the second time length, and smaller than the sum of the first time length and the second time length.

35. The method according to any one of claims 20 to 34, wherein an NR terminal determines the starting time to receive the RAR window based on the second time length, and a Redcap terminal determines the starting time to receive the RAR window based on the third time length.

36. A random access method, comprising:
determining, by a terminal device and based on a first time length, a time to retransmit a physical random access channel PRACH.

37. The method according to claim 36, wherein the first time length is a time length required by the terminal device to perform frequency hopping by the terminal device.

38. The method according to claim 36 or 37, wherein the determining, by a terminal device based on a first time length, a time to retransmit a physical random access channel PRACH comprises:
determining, by the terminal device, the time to retransmit the PRACH, based on the first time length and a fourth time length.

39. The method according to claim 38, wherein the fourth time length is determined based on a processing time required for the terminal device corresponding to UE processing capability 1 to process a physical downlink shared channel PDSCH.

40. The method according to claim 39, wherein the fourth time length is equal to the processing time plus 0.75ms.

41. The method according to any one of claims 36 to 40, wherein the determining, by the terminal device, the time to retransmit the PRACH, based on the first time length and a fourth time length, comprises:
determining, by terminal device, a fifth time length, based on the first time length and the fourth time length; and
determining, by the terminal device and based on the fifth time length, the time to retransmit the PRACH.

42. The method according to claim 41, wherein the determining, by the terminal device and based on the fifth time length, the time to retransmit the PRACH comprises:
determining, by the terminal device and based on the fifth time length, the time to retransmit the PRACH, in a case that a first condition is met.

43. The method according to claim 41 or 42, wherein the method further comprises:
determining, by the terminal device and based on the fourth time length, the time to retransmit the PRACH, in a case that the first condition fails to be met.

44. The method according to claim 42 or 43, wherein the first condition comprises:
a total bandwidth occupied by a random access occasion RO of frequency division multiplexing FDM configured for the terminal device is greater than a first bandwidth.

45. The method according to claim 44, wherein the first bandwidth comprises at least one of following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

46. The method according to claim 45, wherein the bandwidth of the initial UL BWP of the terminal device is preset or configured.

47. The method according to claim 42 or 43, wherein the first condition comprises at least one of following:
a frequency band occupied by an RO of FDM configured for the terminal device is out of a first frequency range; and
an RO selected by the terminal device is out of the first frequency range.

48. The method according to claim 47, wherein the first frequency range is an initial UL BWP of the terminal device.

49. The method according to claim 48, wherein the initial UL BWP is preset, or configured by a network through a system message.

50. The method according to claim 49, wherein the first frequency range is a UL BWP configured for the terminal device of the terminal device, and a bandwidth of the UL BWP configured for the terminal device is greater than a bandwidth of the initial UL BWP.

51. The method according to claim 50, wherein a frequency range of the UL BWP configured for the terminal device comprises a frequency range of the initial UL BWP.

52. The method according to claim 50 or 51, wherein the UL BWP configured for the terminal device is preset, or configured by a network through a system message.

53. The method according to any one of claims 41 to 52, wherein the method further comprises:
transmitting the PRACH or receiving an RAR, by the terminal device without using the frequency hopping, in a case that a network configures a dedicated RO resource for the terminal device.

54. The method according to claim 53, wherein the dedicated RO resource is within a channel bandwidth of the terminal device or within an initial UL BWP configured for the terminal device.

55. The method according to any one of claims 41 to 54, wherein the fifth time length is determined in at least one of following ways:
the fifth time length is equal to a sum of the first time length and the fourth time length;
the fifth time length is equal to a maximum value of the first time length and the fourth time length; and
the fifth time length is greater than the maximum value of the first time length and the fourth time length, and smaller than the sum of the first time length and the fourth time length.

56. A terminal device, comprising:
a processing unit, configured to determine, based on a first condition, whether to perform frequency hopping in a random access procedure.

57. The terminal device according to claim 56, wherein the processing unit is further configured to determine, based on the first condition, whether the frequency hopping needs to be used to transmit a physical random access channel PRACH or receive a random access response RAR.

58. The terminal device according to claim 57, wherein the terminal device further comprises:
a transmitting unit, configured to transmit the PRACH or receive the RAR with the frequency hopping, in a case that the first condition is met.

59. The terminal device according to any one of claims 56 to 58, wherein the first condition comprises:
a total bandwidth occupied by a random access occasion RO of frequency division multiplexing FDM configured for the terminal device is greater than a first bandwidth.

60. The terminal device according to claim 59, wherein the first bandwidth comprises at least one of following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

61. The terminal device according to claim 60, wherein the bandwidth of the initial UL BWP of the terminal device is preset or configured.

62. The terminal device according to any one of claims 56 to 58, wherein the first condition comprises at least one of following:
a frequency band occupied by an RO of FDM configured for the terminal device is out of a first frequency range; and
an RO selected by the terminal device is out of the first frequency range.

63. The terminal device according to claim 62, wherein the first frequency range is an initial UL BWP of the terminal device.

64. The terminal device according to claim 63, wherein the initial UL BWP is preset, or configured by a network through a system message.

65. The terminal device according to claim 64, wherein the first frequency range is a UL BWP configured for the terminal device, and a bandwidth of the UL BWP configured for the terminal device is greater than a bandwidth of the initial UL BWP.

66. The terminal device according to claim 65, wherein a frequency range of the UL BWP configured for the terminal device comprises a frequency range of the initial UL BWP.

67. The terminal device according to claim 65 or 66, wherein the UL BWP configured for the terminal device is preset, or configured by a network through a system message.

68. The terminal device according to any one of claims 56 to 67, wherein the processing unit is further configured to transmit the PRACH or receive the RAR without using the frequency hopping, in a case that a network configures a dedicated RO resource for the terminal device.

69. The terminal device according to claim 68, wherein the dedicated RO resource is within a channel bandwidth of the terminal device or within an initial UL BWP configured for the terminal device.

70. The terminal device according to any one of claims 56 to 69, wherein the terminal device is a Redcap terminal.

71. A terminal device, comprising:
a processing unit, configured to determine, based on a first time length, a starting time to receive a random access response RAR window.

72. The terminal device according to claim 71, wherein the first time length is a time length required by the terminal device to perform frequency hopping.

73. The terminal device according to claim 71 or 72, wherein the processing unit is further configured to determine, based on the first time length and a second time length, the starting time to receive the RAR window.

74. The terminal device according to claim 73, wherein the second time length is one symbol.

75. The terminal device according to claim 73 or 74, wherein the processing unit is further configured to: determine, based on the first time length and the second time length, a third time length; and determine, based on the third time length, the starting time to receive the RAR window.

76. The terminal device according to claim 75, wherein the processing unit being further configured to determine, based on the third time length, the starting time to receive the RAR window, comprises:
determining, based on the third time length, the starting time to receive the RAR window, in a case that a first condition is met.

77. The terminal device according to claim 75 or 76, wherein the processing unit is further configured to determine, by the terminal device, the starting time to receive the RAR window based on the second time length, in a case that the first condition fails to be met.

78. The terminal device according to claim 76 or 77, wherein the first condition comprises:
a total bandwidth occupied by a random access occasion RO of frequency division multiplexing FDM configured for the terminal device is greater than a first bandwidth.

79. The terminal device according to claim 78, wherein the first bandwidth comprises at least one of following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

80. The terminal device according to claim 79, wherein the bandwidth of the initial UL BWP of the terminal device is preset or configured.

81. The terminal device according to claim 76 or 77, wherein the first condition comprises at least one of following:
a frequency band occupied by an RO of FDM configured for the terminal device is out of a first frequency range; and
an RO selected by the terminal device is out of the first frequency range.

82. The terminal device according to claim 81, wherein the first frequency range is an initial UL BWP of the terminal device.

83. The terminal device according to claim 82, wherein the initial UL BWP is preset, or configured by a network through a system message.

84. The terminal device according to claim 83, wherein the first frequency range is a UL BWP configured for the terminal device, and a bandwidth of the UL BWP configured for the terminal device is greater than a bandwidth of the initial UL BWP.

85. The terminal device according to claim 84, wherein a frequency range of the UL BWP configured for the terminal device comprises a frequency range of the initial UL BWP.

86. The terminal device according to claim 84 or 85, wherein the UL BWP configured for the terminal device is preset, or configured by a network through a system message.

87. The terminal device according to any one of claims 76 to 86, wherein the processing unit is further configured to transmit a PRACH or receive an RAR without using the frequency hopping, in a case that a network configures a dedicated RO resource for the terminal device.

88. The terminal device according to claim 87, wherein the dedicated RO resource is within a channel bandwidth of the terminal device or within an initial UL BWP configured for the terminal device.

89. The terminal device according to any one of claims 75 to 88, wherein the third time length is determined in at least one of following ways:
the third time length is equal to a sum of the first time length and the second time length;
the third time length is equal to a maximum value of the first time length and the second time length; and
the third time length is greater than the maximum value of the first time length and the second time length, and smaller than the sum of the first time length and the second time length.

90. The terminal device according to any one of claims 75 to 89, wherein an NR terminal determines the starting time to receive the RAR window based on the second time length, and a Redcap terminal determines the starting time to receive the RAR window based on the third time length.

91. A terminal device, comprising:
a processing unit, configured to determine, based on a first time length, a time to retransmit a physical random access channel PRACH.

92. The terminal device according to claim 91, wherein the first time length is a time length required by the terminal device to perform frequency hopping.

93. The terminal device according to claim 91 or 92, wherein the processing unit is further configured to determine, based on the first time length and a fourth time length, the time to retransmit the PRACH.

94. The terminal device according to claim 93, wherein the fourth time length is determined based on a processing time required for a terminal device corresponding to UE processing capability 1 to process a physical downlink shared channel PDSCH.

95. The terminal device according to claim 94, wherein the fourth time length is equal to the processing time plus 0.75ms.

96. The terminal device according to any one of claims 91 to 95, wherein the processing unit is further configured to:
determine, based on the first time length and a fourth time length, a fifth time length; and
determine, based on the fifth time length, the time to retransmit the PRACH.

97. The terminal device according to claim 96, wherein the processing unit is further configured to determine, based on the fifth time length, the time to retransmit the PRACH, in a case that a first condition is met.

98. The terminal device according to claim 96 or 97, wherein the processing unit is further configured to determine, based on the fourth time length, the time to retransmit the PRACH, in a case that the first condition fails to be met.

99. The terminal device according to claim 97 or 98, wherein the first condition comprises:
a total bandwidth occupied by a random access occasion RO of frequency division multiplexing FDM configured for the terminal device is greater than a first bandwidth.

100. The terminal device according to claim 99, wherein the first bandwidth comprises at least one of following:
a channel bandwidth of the terminal device;
the number of physical resource blocks PRBs corresponding to a maximum channel bandwidth supported by the terminal device;
a preset or configured bandwidth;
the number of preset or configured PRBs; and
a bandwidth of an initial uplink UL bandwidth part BWP of the terminal device.

101. The terminal device according to claim 100, wherein the bandwidth of the initial UL BWP of the terminal device is preset or configured.

102. The terminal device according to claim 97 or 98, wherein the first condition comprises at least one of following:
a frequency band occupied by an RO of FDM configured for the terminal device is out of a first frequency range; and
an RO selected by the terminal device is out of the first frequency range.

103. The terminal device according to claim 102, wherein the first frequency range is an initial UL BWP of the terminal device.

104. The terminal device according to claim 103, wherein the initial UL BWP is preset, or configured by a network through a system message.

105. The terminal device according to claim 104, wherein the first frequency range is a UL BWP configured for the terminal device, and a bandwidth of the UL BWP configured for the terminal device is greater than a bandwidth of the initial UL BWP.

106. The terminal device according to claim 105, wherein a frequency range of the UL BWP configured for the terminal device comprises a frequency range of the initial UL BWP.

107. The terminal device according to claim 105 or 106, wherein the UL BWP configured for the terminal device is preset, or configured by a network through a system message.

108. The terminal device according to any one of claims 96 to 107, wherein the processing unit is further configured to transmit the PRACH or receive an RAR without using the frequency hopping, in a case that a network configures a dedicated RO resource for the terminal device.

109. The terminal device according to claim 108, wherein the dedicated RO resource is within a channel bandwidth of the terminal device or within an initial UL BWP configured for the terminal device.

110. The terminal device according to any one of claims 96 to 109, wherein the fifth time length is determined in at least one of following ways:
the fifth time length is equal to a sum of the first time length and the fourth time length;
the fifth time length is equal to a maximum value of the first time length and the fourth time length; and
the fifth time length is greater than the maximum value of the first time length and the fourth time length, and smaller than the sum of the first time length and the fourth time length.

111. A terminal device, comprising: a processor and a memory, wherein the memory is configured to store a computer program, and the processor is configured to invoke and run the computer program stored in the memory, to implement the method according to any one of claims 1 to 55.

112. A chip, comprising: a processor, configured to invoke a computer program from a memory and run the computer program, to enable a device installed with the chip to implement the method according to any one of claims 1 to 55.

113. A computer-readable storage medium, configured to store a computer program, wherein the computer program enables a computer to implement the method according to any one of claims 1 to 55.

114. A computer program product, comprising computer program instructions which enable a computer to implement the method according to any one of claims 1 to 55.

115. A computer program, which enables a computer to implement the method according to any one of claims 1 to 55.
